(19) Europäisches Patentamt
European Patent Office
Office européen des brevets

(11) Publication number: 0 287 666 B1

# (12) EUROPEAN PATENT SPECIFICATION

(45) Date of publication of patent specification: 26.05.93 (51) Int. Cl.5: C08F 10/00, C08F 4/642

(21) Application number: 87906209.9

(22) Date of filing: 24.09.87

(86) International application number:
PCT/JP87/00696

(87) International publication number:
WO 88/02378 (07.04.88 88/08)

Divisional application 90115128.2 filed on 24/09/87.

## (54) PROCESS FOR POLYMERIZING OLEFINS.

(30) Priority: 24.09.86 JP 223781/86
01.10.86 JP 231242/86
01.10.86 JP 231243/86
11.12.86 JP 293446/86

(43) Date of publication of application:
26.10.88 Bulletin 88/43

(45) Publication of the grant of the patent:
26.05.93 Bulletin 93/21

(84) Designated Contracting States:
AT DE FR GB IT NL

(56) References cited:
EP-A- 0 232 595
EP-A- 0 294 942
EP-A- 0 314 797
JP-A- 5 819 309
JP-A- 6 035 006
JP-A- 6 035 007
JP-A- 6 035 008
JP-A-60 130 604
JP-A-60 260 602
US-A- 4 552 859

(73) Proprietor: MITSUI PETROCHEMICAL INDUSTRIES, LTD.
2-5, Kasumigaseki 3-chome Chiyoda-ku
Tokyo 100(JP)

(72) Inventor: TSUTSUI, Toshiyuki
3-6, Misono 1-chome
Ohtake-shi Hiroshima 739-06(JP)
Inventor: TOYOTA, Akinori
103-21, Minamiiwakuni-cho 2-chome
Iwakuni-shi Yamaguchi 740(JP)
Inventor: KASHIWA, Norio
2-9, Muronoki-cho 1-chome
Iwakuni-shi Yamaguchi 740(JP)

(74) Representative: Myerscough, Philip Boyd et al
J.A.Kemp & Co. 14, South Square Gray's Inn
London, WC1R 5EU (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.6/3.3.1)

## Description

This invention relates to a process for polymerizing olefins. More specifically, it relates to a process for producing an olefin polymer of a narrow molecular weight distribution by polymerizing an olefin with a catalyst showing excellent polymerization activity using a small amount of an aluminoxane, which when applied to the copolymerization of at least two olefins, can give a copolymer having a narrow molecular weight distribution and a narrow composition distribution.

For the production of an alpha-olefin polymer, particularly an ethylene polymer or an ethylene/alpha-olefin copolymer, methods have previously been known in which ethylene is polymerized, or ethylene and an alpha-olefin are copolymerized, in the presence of a titanium-containing catalyst comprising a titanium compound and an organoaluminum compound or a vanadium-containing catalyst comprising a vanadium compound and an organoaluminum compound. Generally, ethylene/alpha-olefin copolymers obtained with titanium-type catalysts have a broad molecular weight distribution and a broad composition distribution and inferior transparency, surface non-adhesiveness, and mechanical properties. Ethylene/alpha-olefin copolymers obtained with vanadium-type catalysts have a narrower molecular weight distribution and a narrower composition distribution and are considerably improved in transparency, surface non-adhesiveness, and mechanical properties, but are still insufficient for uses which require these properties. Accordingly, alpha-olefin polymers, especially ethylene/alpha-olefin copolymers, improved in these properties are required.

On the other hand, catalysts comprising a zirconium compound and an aluminoxane have been proposed recently as a new type of Ziegler catalyst for olefin polymerization.

Japanese Laid-Open Patent Publication No. 19309/1983 discloses a process which comprises polymerizing ethylene and at least one alpha-olefin having 3 to 12 carbon atoms at a temperature of -50 °C to 200 °C in the presence of a catalyst composed of a transition metal-containing catalyst represented by the following formula

$(cyclopentadienyl)_2MeR^1Hal$

wherein $R^1$ represents cyclopentadienyl, $C_1-C_8$ alkyl or halogen, Me represents a transition metal, and Hal represents halogen,
with a linear aluminoxane represented by the following formula

$Al_2OR^2_4(Al(R^2)-O)_n$

wherein $R^2$ represents methyl or ethyl, and n is a number of 4 to 20,
or a cyclic aluminoxane represented by the following formula

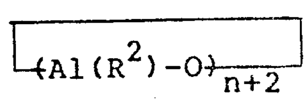

wherein $R^2$ and n are as defined above.

This patent document states that in order to adjust the density of the resulting polyethylene, ethylene should be polymerized in the presence of a small amount (up to 10 % by weight) of a slightly long-chain alpha-olefin or a mixture thereof.

Japanese Laid-Open Patennt Publication No. 95292/1984 describes an invention relating to a process for producing a linear aluminoxane represented by the following formula

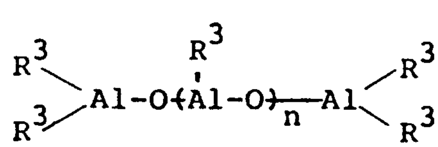

wherein n is 2 to 40 and $R^3$ is $C_1-C_8$ alkyl,
and a cyclic aluminoxane represented by the following formula

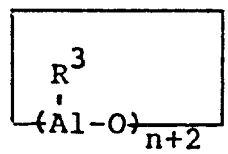

wherein n and $R^3$ are as defined above.

This Publication states that when an olefin is polymerized using a mixture of methylaluminoxane produced by the above process with a bis(cyclopentadienyl) compound of titanium or zirconium, polyethylene is obtained in an amount of at least 25 million grams per gram of the transition metal per hour.

Japanese Laid-Open Patent Publication No. 35005/1985 discloses a process for producing a catalyst for polymerization of olefins, which comprises reacting an aluminoxane compound represented by the following formula

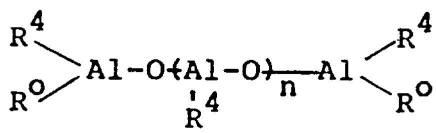

wherein $R^4$ represents $C_1-C_{10}$ alkyl, and $R^o$ is $R^4$ or is bonded to represent -O-, with a magnesium compound, then chlorinating the reaction product, and treating the chlorinated product with a compound of Ti, V, Zr or Cr. The above Publication describes that the above catalyst is especially suitable for the copolymerization of ethylene with a $C_3-C_{12}$ alpha-olefin mixture.

Japanese Laid-Open Patent Publication No. 35006/1985 discloses a combination of (a) a mono-, di- or tri-cyclopentadienyl compound of at least two different transition metals or its derivative with (b) alumoxane (aluminoxane) as a catalyst system for polymers blended in a reactor. Example 1 of this Publication discloses that polyethylene having a number average molecular weight of 15,300 and a weight average molecular weight of 36,400 and containing 3.4 % of a propylene component was obtained by polymerizing ethylene and propylene using bis(pentamethylcyclopentadienyl) dimethyl zirconium and alumoxane as a catalyst. In Example 2 of this Publication, a blend of polyethylene and an ethylene/propylene copolymer having a number average molecular weight of 2,000, a weight average molecular weight of 8,300 and a propylene component content of 7.1 mole % and consisting of a toluene-soluble portion having a number average molecular weight of 2,200, a weight average molecular weight of 11,900 and a propylene component content of 30 mole % and a toluene-insoluble portion having a number average molecular weight of 3,000, a weight average molecular weight of 7,400 and a propylene component content of 4.8 mole % was obtained by polymerizing ethylene and propylene using bis(pentamethylcyclopentadienyl)-zirconium dichloride, bis(methylcyclopentadienyl)zirconium dichloride and alumoxane as a catalyst. Likewise, Example 3 of this Publication describes a blend of LLDPE and an ethylene/propylene copolymer composed of a soluble portion having a molecular weight distribution ($\overline{M}w/\overline{M}n$) of 4.57 and a propylene component content of 20.6 mole % and an insoluble portion having a molecular weight distribution of 3.04 and a propylene component content of 2.9 mole %.

Japanese Laid-Open Patent Publication No. 35007/1985 describes a process which comprises polymerizing ethylene alone or with an alpha-olefin having at least 3 carbon atoms in the presence of a catalyst system comprising metallocene and a cyclic alumoxane represented by the following formula

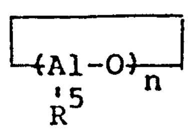

wherein $R^5$ represents an alkyl group having 1 to 5 carbon atoms, and n is an integer of 1 to about 20, or a linear alumoxane represented by the following formula

$$R^5(\underset{R^5}{\underset{|}{Al}}-O)_nAlR^5_2$$

wherein $R^5$ and n are as defined above.

The Publication describes that the polymer obtained by the above process has a weight average molecular weight of about 500 to about 1,400,000 and a molecular weight distribution of 1.5 to 4.0.

Japanese Laid-Open Patent Publication No. 35008/1985 describes that polyethylene or a copolymer of ethylene and a $C_3-C_{10}$ alpha-olefin having a wide molecular weight distribution is produced by using a catalyst system comprising at least two types of metallocenes and alumoxane. The Publication states that the above copolymer has a molecular weight distribution ($\overline{M}w/\overline{M}n$) of 2 to 50.

These catalysts formed from transition metal compounds and aluminoxanes have much higher polymerization activity than the catalyst systems known heretofore.

On the other hand, methods using catalysts formed from solid catalyst components composed of the above transition metal compounds supported on porous inorganic oxide carriers such as silica, silica-alumina and alumina and aluminoxanes are proposed in Japanese Laid-Open Patent Publications Nos. 35006/1985, 35007/1985 and 35008/1985 which are cited above. Japanese Laid-Open Patent Publications Nos. 31404/1986, 108610/1986 and 106808/1985 propose methods using solid catalyst components supported on similar porous inorganic oxide carriers.

Furthermore, Japanese Laid-Open Patent Publications Nos. 260602/1985 and 130604/1985 propose a process for polymerizing olefins using catalysts formed from a transition metal compound and a mixed organoaluminum compound composed of an aluminoxane and an organoaluminum compound.

Japanese Laid-Open Patent Publication No. 260602/1985 discloses a process for producing a polyolefin by polymerizing an olefin using

(1) as the transition metal compound, a compound of the following formula

$(Cp)MR^6R^7R^8$

wherein Cp is cyclopentadienyl, M is Ti, V, Zr or Hf, and each of $R^6$, $R^7$ and $R^8$ represents $C_1-C_6$ alkyl, cyclopentadienyl, halogen or hydrogen, and

(2) as the organoaluminum compounds,

(2)-1 an aluminoxane synthesized from a trialkylaluminum and water and

(2)-2 a compound of the following formula

$R^9_n AlX_{3-n}$

wherein $R^9$ is $C_1-C_{10}$ alkyl, cycloalkyl or aryl, X is halogen, and n is a number of 1 to 3.

This Laid-Open Patent Publication gives a working example in which ethylene is polymerized in a system comprising 3 millimoles of the aluminoxane, 3 millimoles of triethylaluminum and 0.003 millimole of bis-(cyclopentadienyl)zirconium chloride in 400 ml of toluene as a polymerization medium.

Japanese Laid-Open Patent Publication No. 130604/1985 discloses a process for producing a polyolefin by polymerizing an olefin using a catalyst composed of, as main components,

(1) a transition metal compound of the following formula

$(Cp)_2MR^{10}R^{11}$

wherein Cp is cyclopentadienyl, M is Ti, Zr or Hf, and each of $R^{10}$ and $R^{11}$ is H, halogen, $C_1-C_6$ alkyl or cyclopentadienyl,

(2) an aluminoxane obtained by reacting a dialkyl monohalide of the formula

$AlR^{12}_2X^1$

wherein $R^{12}$ is methyl or ethyl, and $X^1$ is halogen,

with water, and

(3) an organoaluminum compound represented by the following formula

$$AlR^{13}_{m}X^{2}_{3-m}$$

wherein $R^{13}$ is $C_1-C_{10}$ alkyl or cycloalkyl, $X^2$ is halogen, and m is a number of 1 to 3.

This Laid-Open Patent Publication gives examples of the amounts of the aluminoxane used per 400 ml of toluene as a polymerization medium, 4.5 millimoles (Examples 1-4 and 8), 3.6 millimoles (Example 5), 3.25 millimoles (Example 6), 10.0 millimoles (Example 7) and 9.0 millimoles (Example 9).

This invention seeks to provide a process for producing an alpha-olefin polymer having a narrow molecular weight distribution and a copolymer of alpha-olefins having a narrow molecular weight distribution and a narrow composition distribution when applied to the copolymerization of at least two olefins, especially a high-molecular-weight ethylene/alpha-olefin copolymer having a narrow molecular weight distribution and a narrow composition distribution, with excellent polymerization activity using a small amount of an aluminoxane.

The invention also relates to a process for producing an olefin polymer having excellent powder properties and a narrow molecular weight distribution, and an olefin copolymer having a narrow molecular weight distribution and a narrow composition distribution when applied to the copolymerization of at least two olefins, especially an ethylene polymer or an ethylene/alpha-olefin copolymer having excellent powder properties and a narrow molecular weight distribution and/or a narrow composition distribution.

According to the invention there is provided a process for polymerizing olefins, which comprises polymerizing or copolymerizing olefins in the presence of a catalyst composed of

(A) a solid catalyst component composed of a compound of a transition metal which compound is represented by formula (I)

$R^1_k R^2_\ell R^3_m R^4_n Me$ (I)

wherein $R^1$ represents a cycloalkadienyl group, $R^2$, $R^3$ and $R^4$ are identical or different and each represents a cycloalkadienyl group, an aryl group, an alkyl group, an aralkyl group, a halogen atom or a hydrogen atom, Me represents zirconium, titanium or hafnium, k is 1, 2, 3 or 4, l, m and n are each 0, 1, 2 or 3, and $k+l+m+n=4$, supported on an inorganic carrier,

(B) an aluminoxane, and

(C) an organoaluminium compound having a hydrocarbon group other than n-alkyl groups.

The transition metal of the compound of formula (I) is preferably titanium or zirconium, with zirconium especially preferred.

Examples of the cycloalkadienyl group represented by $R^1$ are a cyclopentadienyl group, a methylcyclopentadienyl group, an ethylcyclopentadienyl group, a dimethylcyclopentadienyl group, an indenyl group and a tetrahydroindenyl group. Examples of the cycloalkadienyl group represented by $R^2$, $R^3$ and $R^4$ may be the same as above.

The aryl group represented by $R^2$, $R^3$ and $R^4$ is preferably a phenyl or tolyl group, for example.

Likewise, preferred examples of the aralkyl group are benzyl and neophile groups.

Examples of preferred alkyl groups are methyl, ethyl, propyl, isopropyl, butyl, hexyl, octyl, 2-ethylhexyl, decyl and oleyl groups.

The halogen atom may be, for example, fluorine, chlorine or bromine.

Examples of zirconium compounds corresponding to formula (I) in which Me is zirconium are listed below.

bis(Cyclopentadienyl)zirconium monochloride monohydride,
bis(cyclopentadienyl)zirconium monobromide monohydride,
bis(cyclopentadienyl)methylzirconium hydride,
bis(cyclopentadienyl)ethylzirconium hydride,
bis(cyclopentadienyl)cyclohexylzirconium hydride,
bis(cyclopentadienyl)phenylzirconium hydride,
bis(cyclopentadienyl)benzylzirconium hydride,
bis(cyclopentadienyl)neopentylzirconium hydride,
bis(methylcyclopentadienyl)zirconium monochloride monohydride,
bis(indenyl)zirconium monochloride monohydride,
bis(cyclopentadienyl)zirconium dichloride,

bis(cyclopentadienyl)zirconium dibromide,
bis(cyclopentadienyl)methylzirconium monochloride,
bis(cyclopentadienyl)ethylzirconium monochloride,
bis(cyclopentadienyl)phenylzirconium monochloride,
bis(cyclopentadienyl)benzylzirconium monochloride,
bis(methylcyclopentadienyl)zirconium dichloride,
bis(indenyl)zirconium dichloride,
bis(indenyl)zirconium dibromide,
bis(cyclopentadienyl)diphenylzirconium,
bis(cyclopentadienyl)dibenzylzirconium,
ethylenebis(indenyl)dimethylzirconium,
ethylenebis(indenyl)diethylzirconium,
ethylenebis(indenyl)dibenzylzirconium,
ethylenebis(indenyl)methylzirconium monobromide,
ethylenebis(indenyl)ethylzirconium monochloride,
ethylenebis(indenyl)benzylzirconium monochloride,
ethylenebis(indenyl)methylzirconium monochloride,
ethylenebis(indenyl)zirconium dichloride,
ethylenebis(indenyl)zirconium dibromide,
ethylenebis(4,5,6,7-tetrahydro-1-indenyl)dimethylzirconium,
ethylenebis(4,5,6,7-tetrahydro-1-indenyl)methylzirconium monochloride,
ethylenebis(4,5,6,7-tetrahydro-1-indenyl)zirconium dichloride,
ethylenebis(4,5,6,7-tetrahydro-1-indenyl)zirconium dibromide,
ethylenebis(4-methyl-1-indenyl)zirconium dichloride,
ethylenebis(5-methyl-1-indenyl)zirconium dichloride,
ethylenebis(6-methyl-1-indenyl)zirconium dichloride,
ethylenebis(7-methyl-1-indenyl)zirconium dichloride,
ethylenebis(5-methoxy-1-indenyl)zirconium dichloride,
ethylenebis(2,3-dimethyl-1-indenyl)zirconium dichloride,
ethylenebis(4,7-dimethyl-1-indenyl)zirconium dichloride,
ethylenebis(4,7-dimethoxy-1-indenyl)zirconium dichloride,

Examples of titanium compounds corresponding to formula (I) in which Me is titanium are listed below.

bis(Cyclopentadienyl)titanium monochloride monohydride,
bis(cyclopentadienyl)methyltitanium hydride,
bis(cyclopentadienyl)phenyltitanium chloride,
bis(cyclopentadienyl)benzyltitanium chloride,
bis(cyclopentadienyl)titanium chloride,
bis(cyclopentadienyl)dibenzyltitanium,
ethylenebis(indenyl)titanium dichloride, and
ethylenebis(4,5,6,7-tetrahydro-1-indenyl)titanium dichloride.

Examples of hafnium compounds corresponding to formula (I) in which Me is hafnium are listed below.

bis(Cyclopentadienyl)hafnium monochloride monohydride,
bis(cyclopentadienyl)ethylhafnium hydride,
bis(cyclopentadienyl)phenylhafnium chloride,
bis(cyclopentadienyl)hafnium dichloride,
bis(cyclopentadienyl)dibenzylhafnium,
ethylenebis(indenyl)hafnium dichloride, and
ethylenebis(4,5,6,7-tetrahydro-1-indenyl)hafnium dichloride.

In the catalyst component (A), the IVB transition metal compound may be treated with an organic metal compound or a halogen-containing silicon compound prior to deposition. The organic metal compound may be, for example, an organoaluminum compound, an organoboron compound, an organomagnesium compound, an organozinc compound or an organolithium compound. The organoaluminum compound is preferred.

Examples of the organoaluminum compound include trialkylaluminums such as trimethylaluminum, triethylaluminum and tributylaluminum; alkenylaluminums such as isoprenylaluminum; dialkyl aluminum alkoxides such as dimethyl aluminum methoxide, diethyl aluminum ethoxide and dibutyl aluminum butoxide; alkyl aluminum sesquialkoxides such as methyl aluminum sesquimethoxide and ethyl aluminum sesquiethoxide; partially alkoxylated alkylaluminums having an average composition of the formula

$$R^1_{2.5}Al(OR^2)_{0.5};$$

dialkyl aluminum halides such as dimethyl aluminum chloride, diethyl aluminum chloride and dimethyl aluminum bromide; alkyl aluminum sesquihalides such as methyl aluminum sesquichloride and ethyl aluminum sesquichloride; partially halogenated alkylaluminums, for example alkyl aluminum dihalides such as methyl aluminum dichloride and ethyl aluminum dichloride.

The trialkylaluminums and dialkyl aluminum chlorides are preferred, and above all trimethylaluminum, triethylaluminum and dimethyl aluminum chloride are preferred.

Triethylboron is a preferred example of the organoboron compound.

Examples of the organomagnesium compound are ethylbutylmagnesium, di-n-hexylmagnesium, ethyl magnesium bromide, phenyl magnesium bromide and benzyl magnesium chloride.

Diethylzinc is a preferred example of the organozinc compound.

Methyllithium, butyllithium and phenyllithium are examples of the organolithium compound.

An organoaluminum compound is preferred as the organic metal compound (C).

As the halogen-containing silicon compound as a treating agent, compounds of the following formula (IV)

$SiY_dR^5_e(OR^6)_{4-d-e}$ (IV)

wherein Y is a chlorine or bromine atom, $R^5$ and $R^6$, independently from each other, represent an alkyl group having 1 to 12 carbon atoms, an aryl group, or a cycloalkyl group having 3 to 12 carbon atom, d is a number of 1 to 4 and e is a number of 0 to 4, provided that the sum of d and e is a number of 1 to 4, are preferably used.

Examples of such compounds include silicon tetrachloride, silicon tetrabromide, silicon trichloride, methylsilicon trichloride, ethylsilicon trichloride, propylsilicon trichloride, phenylsilicon trichloride, cyclohexylsilicon trichloride, silicon tribromide, ethylsilicon tribromide, dimethylsilicon dichloride, methylsilicon dichloride, phenylsilicon dichloride, methoxysilicon trichloride, ethoxysilicon trichloride, propoxysilicon trichloride, phenoxysilicon trichloride, ethoxysilicon tribromide, methoxysilicon dichloride, dimethoxysilicon dichloride, and silanol trichloride. These compounds may be used singly or in combination. Among them, silicon tetrachloride, silicon trichloride and methylsilicon trichloride are preferred.

The mixing ratio of the organometallic compound to the inorganic carrier in the above treatment, as the ratio of the amount of the organometallic compound in millimoles/the amount of the carrier in grams, is from 0.5 to 50, preferably from 1 to 30, more preferably from 1.5 to 20.

The treatment of the inorganic carrier with the organometallic compound in the preparation of the catalyst component (A) can be carried out by dispersing the carrier in an inert solvent, adding at least one of the above-described organometallic compounds, and treating the carrier at a temperature of 0 to 120 °C, preferably 10 to 100 °C, more preferably 20 to 90 °C, for a period of 10 minutes to 10 hours, preferably 20 minutes to 5 hours, more preferably 30 minutes to 3 hours, under reduced or elevated pressure.

Examples of the inert solvent are aromatic hydrocarbons such as benzene, toluene and xylene, aliphatic hydrocarbons such as pentane, hexane and isooctane and alicyclic hydrocarbons such as cyclohexane.

In the above-treatment, the mixing ratio of the inorganic carrier to the halogen-containing silicon compound, is such that the halogen-containing silicon compound is used in an amount of 0.001 to 10 moles, preferably 0.01 to 50 moles, more preferably 0.05 to 1 mole, per gram of the carrier compound. Preferably, after the above treatment, the liquid portion containing the excess of the halogen-containing silane compound, etc. is removed from the reaction mixture by such a method as filtration or decantation.

The treatment of the inorganic carrier with the halogen-containing silicon compound in preparing the catalyst component (A) may be carried out at a temperature of -50 to 200 °C, preferably 0 to 100 °C, more preferably 20 to 70 °C, for a period of 10 minutes to 10 hours, preferably 20 minutes to 5 hours, under atmospheric, reduced or elevated pressure.

An inert solvent may be used in the above treatment. Examples of the inert solvent include aromatic hydrocarbons such as benzene, toluene and xylene, aliphatic hydrocarbons such as pentane, hexane, isooctane, decane and dodecane, alicyclic hydrocarbons such as cyclohexane and halogenated hydrocarbons such as chlorobenzene and ethylene dichloride.

In the deposition of the transition metal compound of formula (I) on the inorganic carrier in the preparation of the catalyst component (A), an inert solvent needs not to be used when the transition metal compound is a liquid substance. If the transition metal compound is a solid substance at ordinary

temperature, it is preferred generally to use an inert solvent capable of dissolving the transition metal compound.

The inert solvent used at this time may be the same inert solvent as that used in treating the inorganic carrier with the halogen-containing silicon compound. Aromatic hydrocarbons such as benzene and toluene and halogenated hydrocarbons such as chlorobenzene are especially preferred.

The amount of the transition metal compound used in the above supporting reaction is preferably 0.001 to 500 millimoles, more preferably 0.01 to 100 millimoles, especially preferably 0.1 to 50 millimoles, per gram of the inorganic carrier.

The amount of the inert solvent used in the above supporting reaction is preferably 0.5 to 1000 ml, more preferably 1 to 100 ml, especially preferably 2 to 50 ml, per gram of the inorganic carrier treated with the halogen-containing silane compound.

The above supporting reaction can be carried out by contacting and mixing the inorganic carrier and the transition metal compound at a temperature of 0 to 200 °C, preferably 0 to 100 °C, especially preferably 20 to 80 °C, for a period of 1 minute to 10 hours, 5 minutes to 5 hours, 10 minutes to 3 hours.

After the supporting reaction by the above method, it is preferred to remove the liquid portion of the reaction mixture by such a method as filtration or decantation and wash the residue several times with an inert solvent.

In the catalyst of this invention, the solid catalyst component (A) is obtained by supporting the transition metal compound of formula (I) on the carrier.

The inorganic carrier is advantageously a granular or fine particulate solid having a particle diameter of, for example, 10 to 300 micrometers, preferably 20 to 200 micrometers. Preferably, it is a porous oxide. Specific examples include $SiO_2$, $Al_2O_3$,MgO, $ZrO_2$, $TiO_2$, $B_2O_3$, CaO, ZnO, BaO, $ThO_2$ and mixtures of these such as $SiO_2-MgO$, $SiO_2-Al_2O_3$, $SiO_2-TiO_2$, $SiO_2-V_2O_5$, $SiO_2-Cr_2O_3$ and $SiO_2-TiO_2-MgO$. Carriers containing at least one component selected from the group consisting of $SiO_2$ and $Al_2O_3$ as a main component are preferred.

The inorganic oxides may contain small amounts of carbonates, sulfates, nitrates or oxide components such as $Na_2CO_3$, $K_2CO_3$, $CaCO_3$, $MgCO_3$, $Na_2SO_4$, $Al_2(SO_4)_3$, $BaSO_4$, $KNO_3$, $Mg(NO_3)_2$, $Al(NO_3)_3$, $Na_2O$, $K_2O$ and $Li_2O$.

The porous inorganic carrier have different properties depending upon its type and the method of production. Carriers preferably used in this invention have a specific surface area of 50 to 1000 $m^2/g$, preferably 100 to 700 $m^2/g$ and a pore volume of 0.3 to 2.5 $cm^2/g$. The above carrier is used after it is calcined at a temperature of usually 150 to 1000 °C, preferably 200 to 800 °C.

In the catalyst component (A) in this invention, the transition metal compound of formula (I) is supported in an amount of 3 x $10^{-3}$ to 3 milligram-atoms, preferably 5 x $10^{-3}$ to 2 milligram-atoms, more preferably 1 x $10^{-2}$ to 1 milligram-atom, as the transition metal atom, per gram of the inorganic carrier treated with the organometallic compound.

The catalyst component (A) contains the transition metal compound in an amount of usually 0.005 millimole to 5 millimoles, preferably 0.01 millimole to 1 millimole, especially preferably 0.03 millimole to 0.3 millimole, per gram of the inorganic carrier treated with the halogen-containing silicon compound.

The catalyst component (B) is an aluminoxane. The aluminoxane used as the catalyst component is, for example, an organoaluminum compound of the following formula (II)

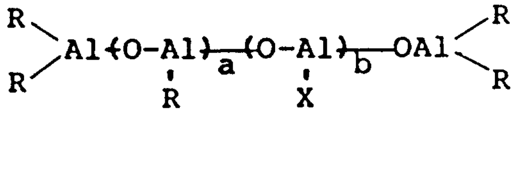 (II)

wherein R is a hydrocarbon group, X is a halogen atom, and a and b, independently from each other, represent a number of 0 to 80 with the proviso that a and b are not simultaneously zero (in this formula, the degree of polymerization is a+b+2),
or the following formula (III)

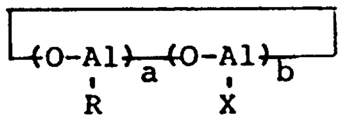 (III)

wherein R, X, a and b are as defined hereinabove with regard to formula (II) (in this formula, the degree of polymerization is a + b).

In formulae (II) and (III), R represents a hydrocarbon group such as an alkyl, cycloalkyl, aryl or aralkyl group. Preferred as the alkyl group are lower alkyl groups such as a methyl, ethyl, propyl or butyl group. Cyclopentyl and cyclohexyl groups are preferred examples of the cycloalkyl group. Preferred aryl groups are, for example, phenyl and tolyl groups. Preferably, the aralkyl group is, for example, a benzyl or neophile group. Of these, the alkyl groups are especially preferred.

X is a halogen atom such as fluorine, chlorine, bromine and iodine. Chlorine is especially preferred.

a and b, independently from each other, are numbers of 0 to 80, with the proviso that a and b are not simultaneously zero.

When b is 0, formula (II) may be written as the following formula (II) - 1

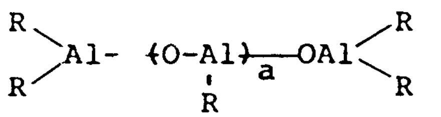 (II)-1

wherein R and a are as defined above,
and formula (III) may be written as the following formula (III) - 1

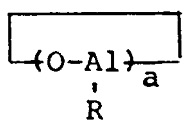 (III)-1

wherein R and a are as defined above.

In formula (II) - 1, a is preferably 2 to 50, more preferably 4 to 30. Furthermore, in formula (III) - 1, a is preferably 4 to 52, more preferably 6 to 32.

a is preferably 0 to 40, more preferably 3 to 30, and b is preferably 1 to 40, more preferably 3 to 30.

The value of a + b is preferably 4 to 50, more preferably 8 to 30.

In formulae (II) and (III), the two units

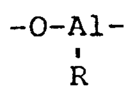

and

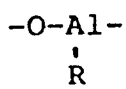

may be bonded in blocks or at random.

When a is 0 in formulae (II) and (III), it is desirable to use an organoaluminum compound of the following formula (V)

$AlR^7_f Z_{3-f}$ (V)

wherein $R^7$ is an alkyl group having 1 to 10 carbon atoms or a cycloalkyl group having 3 to 12 carbon

atoms, Z is a halogen atom, and f is a number of 1 to 3,
together with the halogenated aluminoxane. Examples of such an organoaluminum compound include trimethylaluminum, triethylaluminum, tributylaluminum trihexylaluminum, diethylaluminum chloride and ethylaluminum sesquichloride.

Preferably, the halogenated aluminoxane and the organoaluminum compound are used at this time such that the amount of the organoaluminum compound is 0.1 to 10 moles, preferably 0.3 to 3.0 moles, especially preferably 0.5 to 2.0 mole, per mole of Al atom in the halogenated aluminoxane.

The aluminoxane or the halogenated aluminoxane described above can be produced, for example, by the following methods.

(1) A method which comprises suspending a compound containing water of adsorption or a salt containing water of crystallization, such as magnesium chloride hydrate, nickel sulfate hydrate or cerous chloride hydrate in a medium such as benzene, toluene, ethyl ether or tetrahydrofuran, and reacting it with a trialkylaluminum and/or a dialkylaluminum monohalide.

(2) A method which comprises reacting a trialkylaluminum and/or a dialkylaluminum monohalide directly with water in a medium such as benzene, toluene, ethyl ether or tetrahydrofuran.

It is preferred to adopt the method (1). Incidentally, the aluminoxane may contain a small amount of an organometallic compound.

Then catalyst component (C) is an organoaluminum compound having a hydrocarbon group other than n-alkyl groups. Such a hydrocarbon group may be, for example, an alkyl group having a branched chain such as an iso-alkyl group, a cycloalkyl group and an aryl group. Examples of the above organoaluminum compound are trialkylaluminums such as triisopropylaluminum, triisobutylaluminum, tri-2-methylbutylaluminum, tri-3-methylbutylaluminum, tri-2-methylpentylaluminum, tri-3-methylpentylaluminum, tri-4-methylpentylaluminum, tri-2-methylhexylaluminum, tri-3-methylhexylaluminum and tri-2-ethylhexylaluminum; tricycloalkylaluminums such as tricyclohexylaluminum; triarylaluminums such as triphenylaluminum and tritolylaluminum; dialkylaluminum hydrides such as diisobutylaluminum hydride; and alkylaluminum alkoxides such as isobutylaluminum methoxide, isobutylaluminum ethoxide and isobutylaluminum isopropoxide. Of these organoaluminum compounds, organoaluminum compounds having a branched alkyl group are preferred, and the trialkylaluminums are especially preferred. Furthermore, isoprenylaluminums having the general formula $(i-C_4C_9)_xAl_y(C_5H_{10})_z$ wherein x, y and z are positive numbers and $z \geqq 2x$ are also preferably used. There can also be used compounds which will yield the above organoaluminum compounds in the polymerization system, for example a combination of an aluminum halide and an alkyllithium or a combination of an aluminum halide and an alkylmagnesium, may also be used.

In the process of this invention, the polymerization of olefins may be carried out by a liquid-phase polymerization method (e.g., slurry polymerization or solution polymerization) or a gas-phase polymerization method. Prior to the olefin polymerization, prepolymerization may be carried out using a small amount of an olefin.

The prepolymerization is carried out (1) in the absence of solvent, or (2) in an inert hydrocarbon medium. Of these, the method (1) is preferred. Desirably, at this time, the catalyst components (A) and (B) are mixed in an inert hydrocarbon medium, and the solvent is removed by using an evaporator at room temperature or an elevated temperature under atmospheric or reduced pressure. The mole ratio of the transition metal atom in catalyst component (A) to the aluminum atom in catalyst component (B) in the prepolymerization treatment (Al/the transition metal atom) is from 20 to 5000, preferably from 25 to 2000, more preferably from 30 to 1000. The prepolymerization temperature is from -20 °C to 70 °C, preferably -10 °C to 60 °C, more preferably 0 °C to 50 °C.

The treatment may be carried out either batchwise or continuously under reduced, atmospheric or elevated pressure. The prepolymerization may be carried out in the presence of a molecular weight controlling agent such as hydrogen, but it is preferred to limit its amount at least to one sufficient to produce a prepolymer having an intrinsic viscosity [$\eta$], measured in decalin at 135 °C, of at least 0.2 dl/g, preferably 0.5 to 20 dl/g.

The amount of the transition metal compound (A) at the time of performing the process of this invention by the slurry polymerization technique or the gas-phase polymerization technique is, in terms of the concentration of the transition metal atom in the polymerization reaction system, $10^{-8}$ to $10^{-2}$ gram-atom/liter, preferably $10^{-7}$ to $10^{-3}$ gram-atom/liter.

In the process of this invention, the amount of the aluminoxane (B), calculated as the aluminum atom in the reaction system, is not more than 3 milligram-atoms/liter, preferably 0.1 to 2.5 milligram-atoms/liter, especially preferably 0.2 to 2 milligram-atoms/liter. The proportion of the aluminium atoms of the aluminoxane component (B) based on the total amount of the aluminium atoms in the aluminoxane

component (B) and the organoaluminium compound component (C) is usually 20 to 80 %, preferably 25 to 75 mole %, and especially preferably 30 to 70 %. Corresponding to this amount, the proportion of the aluminium atom in the organoaluminium compound component (C) is usually 20 to 80 %, preferably 25 to 75 %, especially preferably 30 to 70 %. In the process of this invention, the ratio of the total amount of aluminium atoms in the aluminoxane component (B) and the organoaluminium compound component (C) to the transition metal atom in the reaction system is usually from 20 to 10000, preferably from 50 to 5000, especially preferably from 100 to 2000.

Using the above catalyst in accordance with this invention, olefins can be polymerized or copolymerized advantageously.

We have also found that by limiting the amount of the aluminoxane used to not more than 3 milligram-atoms/liter as Al atom in the catalyst system composed of the components (A), (B) and (C) excellent catalytic activity can be exhibited.

All the catalysts described above can be used advantageously in the homopolymerization or copolymerization of olefins. They are especially effective for the production of an ethylene polymer and ethylene/alpha-olefin copolymers. Examples of the olefins that can be utilized are ethylene and alpha-olefins having 3 to 20 carbon atoms, such as propylene, 1-butene, 1-hexene 4-methyl-1-pentene, 1-octene, 1-decene, 1-dodecene, 1-tetradecene, 1-hexadecene, 1-octadecene and 1-eicocene.

The polymerization of olefins by the process of this invention is usually carried out in a gas-phase or in a liquid phase, for example in slurry. In the slurry polymerization, an inert hydrocarbon may be used as a solvent. It is also possible to use an olefin itself as the solvent.

Specific examples of the hydrocarbon solvent are aliphatic hydrocarbons such as butane, isobutane, pentane, hexane, octane, decane, dodecane, hexadecane and octadecane; alicyclic hydrocarbons such as cyclopentane, methylcyclopentane, cyclohexane and cyclooctane, aromatic hydrocarbons such as benzene, toluene and xylene, and petroleum fractions such as gasoline, kerosene and light oil. Of these hydrocarbon media, the aliphatic hydrocarbons, alicyclic hydrocarbons and petroleum fractions are preferred.

When slurry polymerization is carried out in the process of this invention, the polymerization temperature is usually -50 to 120 °C, preferably 0 to 100 °C.

When slurry polymerization or gas-phase polymerization is carried out by the process of this invention, the proportion of the transition metal compound is usually $10^{-8}$ to $10^{-2}$ gram-atom/liter, preferably $10^{-7}$ to $10^{-3}$ gram-atom/liter as the transition metal atom in the polymerization system.

In the present polymerization reaction, the aluminoxane may, or may not, be used additionally. To obtain a polymer having excellent powder properties, it is preferred not to use the aluminoxane additionally.

The polymerization pressure is usually atmospheric pressure to 10 MPa (100 kg/cm$^2$), preferably 0.2 to 5 MPa (2 to 50 kg/cm$^2$). The polymerization may be carried out batchwise, semi-continuously or continuously.

The polymerization may be carried out in two or more stages having different reaction conditions.

When the slurry polymerization method or the gas-phase polymerization method is used to polymerize olefins, particularly ethylene or ethylene with an alpha-olefin in this invention, there is no polymer adhesion to the reactor and the resulting polymer has excellent powder properties and a narrow molecular weight distribution. When the invention is applied to the copolymerization of at least two olefins, an olefin copolymer having a narrow molecular weight distribution and a narrow composition distribution can be obtained.

[EXAMPLES]

The process of this invention will now be specifically illustrated by the following examples. The $\overline{M}w/\overline{M}n$ value was measured by the following procedure in accordance with Takeuchi, "Gel Permeation Chromatography", published by Maruzen Co., Ltd.

(1) By using standard polystyrene of a known molecular weight (monodisperse polystyrene produced by Toyo Soda Co., Ltd.), the molecular weight M and its GPC (gel permeation chromatograph) count are measured. A calibration curve of the molecular weight M versus EV (elution volume) is prepared. The concentration at this time is adjusted to 0.02 % by weight.

(2) The GPC chromatogram of the sample is taken by GPC, and the number average molecular weight $\overline{M}n$ and the weight average molecular weight $\overline{M}w$ of the sample are calculated as polyethylene by the procedure (1) above, and the $\overline{M}w/\overline{M}n$ value is determined. The sample preparation conditions and the GPC measurement conditions at this time are as follows:-

Sample preparation:

(a) Take the sample together with o-dichlorobenzene solvent in an Erlenmeyer flask so that its concentration is 0.1 % by weight.
(b) Heat the flask to 140 °C and stir the contents for about 30 minutes to dissolve the sample.
(c) Subject the filtrate from it to GPC.

GPC measurement conditions:

(a) Device: 150C-ALC/GPC made by Waters Co.
(b) Column: GMH type made by Toyo Soda Co., Ltd.
(c) Amount of the sample: 400 microliters
(d) Temperature: 140 °C
(e) Flow rate: 1 ml/min.

The amount of an n-decane-soluble portion in the copolymer (as the amount of the soluble portion is smaller, the narrow is the composition distribution) was measured by adding about 3 g of the copolymer to 450 ml of n-decane, dissolving the copolymer at 145 °C, cooling the solution to 23 °C, removing the n-decane-insoluble portion by filtration, and recovering the n-decane-soluble portion from the filtrate.

The B value of the ethylenic copolymer of this invention is defined as follows:

$$B = \frac{P_{OE}}{2P_O \cdot P_E}$$

wherein $P_E$ represents the molar fraction of the ethylene component in the copolymer, $P_O$ represents the molar fraction of the alpha-olefin component, and $P_{OE}$ represents the molar fraction of the alpha-olefin/ethylene sequence in the total dyad sequence.

The B value is an index showing the state of distribution of the individual monomer components in the copolymer and is calculated by determining $P_E$, $P_O$ and $P_{OE}$ in the above definition in accordance with the papers of G. J. Ray [Macromolecules, 10, 773 (1977)], J. C. Randall [Macromolecules, 15, 353 (1982), J. Polymer Science, Polymer Physics Ed., 11, 275 (1973)], and K. Kimura [Polymer, 25, 441 (1984)]. As the B value is larger, the amount of block-like sequences is smaller and the distribution of ethylene and the alpha-olefin is more uniform. Thus, the copolymer has a narrower composition distribution.

The composition distribution B value is determined as follows: About 200 mg of the copolymer is uniformly dissolved in 1 ml of hexachlorobutadiene in a sample tube having a diameter of 10 mm, and a $^{13}C$-NMR spectrum of the sample is taken usually at a temperature of 120 °C under the following conditions.

Measuring frequency: 25.05 MHz
Spectral width: 1500 Hz
Filter width: 1500 Hz
Pulse repeating time: 4.2 sec
Pulse width: 7 microseconds
Number of integrations: 2000 to 5000

From the spectrum, $P_E$, $P_O$ and $P_{OE}$ are determined, and the B value is calculated from them.

EXAMPLE 1

<u>Preparation of aluminoxane</u>

A 400 ml flask fully purged with nitrogen was charged with 37 g of $Al_2(SO_4)_3.14H_2O$ and 125 ml of toluene, and cooled to 0 °C. Then, 500 millimoles of trimethyl aluminum diluted with 125 ml of toluene was added dropwise. The temperature was then elevated to 40 °C, and the reaction was continued at this temperature for 10 hours. After the reaction, the reaction mixture was subjected to solid-liquid separation by filtration. Toluene was removed from the filtrate to obtain 13 g of aluminoxane as a white solid. It had a molecular weight, determined by freezing point depression in benzene, of 930. It shows an m value of 14 in catalyst component [B].

Preparation of a zirconium catalyst

A 200 ml flask fully purged with nitrogen was charged with 3.8 g of calcined silica obtained by calcining silica (average particle diameter 70 $\mu$m, specific surface area 260 $m^2/g$, pore volume 1.65 $cm^3/g$) at 300 °C for 4 hours, and, 51.5 ml of a toluene solution (Al 0.49 mole/liter) of aluminoxane, and they were stirred at room temperature for 10 minutes, Then, toluene was removed by an evaporator at room temperature to give a solid product. To the solid product was added 7.9 ml of a toluene solution (Zr 0.04 millimole/liter) of bis-(cyclopentadienyl)zirconium dichloride, and again toluene was removed by an evaporator at room temperature to give a catalyst component having a Zr content of 0.54 % by weight. A gaseous mixture of ethylene and nitrogen (30 liters/hr and 45 liters/hr, respectively) was passed through the resulting catalyst component at room temperature for 30 minutes to obtain a solid catalyst component in which ethylene was polymerized in an amount of 0.86 g per gram of the catalyst.

Polymerization

A 2-liter stainless steel autoclave fully purged with nitrogen was charged with 900 ml of hexane and 100 ml of 1-hexane, and heated to 45 °C. Then, 1 millimole of triisobutyl aluminum and 0.015 milligramatom, calculated as zirconium atom, of the zirconium catalyst subjected to prepolymerization with ethylene were charged. The temperature was then elevated to 60 °C. Subsequently, ethylene was introduced and the polymerization was started. Ethylene was continuously fed so as to maintain the total pressure at 0.7 MPa-G (7 $kg/cm^2$-G), and the polymerization was carried out at 70 °C for 2 hours. After the polymerization, the polymer slurry was added to a large excess of methanol, and the mixture was filtered. The resulting polymer was dried at 80 °C for 12 hours under reduced pressure to give 101.2 g of a polymer having an MFR of 0.16 g/10 min., a density of 0.916 $g/cm^3$, an $\overline{M}w/\overline{M}n$ of 2.98, a bulk density of 0.33 $g/cm^3$ and an n-decane soluble weight fraction at room temperature of 0.31 % by weight. The polymerization conditions, etc. are shown in Table 1.

EXAMPLE 2

Example 1 was repeated except that the amount of ethylene prepolymerized was changed to 0.66 g per gram of the catalyst.

Polymerization

Example 1 was repeated except that 1-hexane was not used, 1000 ml of hexane was used as a solvent, and ethylene was homopolymerized under a total pressure of 0.6 MPa-G (6 $kg/cm^2$-G). The results are shown in Table 2.

COMPARATIVE EXAMPLE 1

Polymerization

Example 2 was repeated except that isobutyl aluminum was not used. The results are shown in Table 2.

EXAMPLE 3

Polymerization

A 2-liter stainless steel autoclave purged fully with nitrogen was charged wtih 250 g of sodium chloride (special reagent grade, Wako Pure Chemicals, Co., Ltd.), and dried under reduced pressure at 90 °C for 1 hour. Then, the autoclave was cooled to 65 °C, and the inside of the autoclave was replaced by ethylene. Subsequently, 1 millimole of triisobutyl aluminum, 0.015 milligram-atom, calculated as zirconium atom, of the zirconium catalyst prepared in Example 1, and 10 ml of 1-hexene were introduced. Furthermore, ethylene was introduced, and the total pressure was adjusted to 0.8 MPa-G (8 $kg/cm^2$-G). The polymerization was started. Thereafter, only ethylene was supplied, and the polymerization was carried out at 70 °C for 2 hours while maintaining the total pressure at 0.8 MPa-G (8 $kg/cm^2$-G). After the polymerization, the reaction mixture was washed with water to remove sodium chloride. The remaining polymer was washed with methanol, and dried overnight at 80 °C under reduced pressure. The polymer

was yielded in an amount of 46.8 g, and had an MFR of 1.45 g/10 min., a density of 0.925 g/cm$^3$, an $\overline{M}w/\overline{M}n$ of 3.03, a bulk density of 0.31 g/cm$^3$ and an n-decane-soluble portion weight fraction of 0.10 % by weight.

EXAMPLE 4

Example 3 was repeated except that in the polymerization of Example 3, 1-hexene was not used, triisobutyl aluminum and the zirconium catalyst were added at 75 °C, and the polymerization was carried out at 80 °C for 1 hour. The results are shown in Table 2.

EXAMPLES 5-8

Polymerization was carried out under the conditions indicated in Table 1 in the same way as in Example 1. The results are shown in Table 2.

EXAMPLE 9

Preparation of a zirconium catalyst

A 200 ml flask purged fully with nitrogen was charged with 5.8 g of calcined alumina obtained by calcining alumina (average particle diameter 60 µm, specific surface area 290 m$^2$/g, pore volume 1.05 ml/g) at 500 °C for 5 hours, 17 ml of a toluene solution (Al 1 mole/liter) of dimethylaluminum monochloride, and 50 ml of toluene, and they were heated at 80 °C for 2 hours. The reaction mixture was then subjected to solid-liquid separation by filtration. The solid portion was transferred to 50 ml of toluene, and 32 ml of a toluene solution (Zr 0.04 mole/liter) of bis(cyclopentadienyl)zirconium dichloride was added. The mixture was heated at 80 °C for 1 hour. Again, the mixture was subjected to solid-liquid separation by filtration to give a solid catalyst. The zirconium content of the solid catalyst was 0.27 % by weight. 0.1 milligram, calculated as zirconium atom, of the solid catalyst, 20 ml of a toluene solution (Al 0.49 mole/liter) of the aluminoxane synthesized in Example 1, and 20 ml of toluene were added to the solid catalyst, and the mixture was stirred at room temperature for 30 minutes. Toluene was then removed by an evaporator at room temperature. A gaseous mixture of ethylene and nitrogen (30 liters/hr and 45 liters/hr, respectively) was passed through the resulting catalyst component at room temperature for 30 minutes to give a solid catalyst component in which ethylene was polymerized in an amount of 0.30 g per gram of the catalyst.

Polymerization

Polymerization was carried out in the same way as in Example 4. The results are shown in Table 2.

COMPARATIVE EXAMPLE 2

Example 9 was repeated except that triisobutyl aluminum was not used. The results are shown in Table 2.

Table 1

| | Transition metal compound (mmol/ℓ) | Organoaluminum compound (C) | | Total pressure ($kg/cm^2$-G) MPa = G | Comonomer | |
|---|---|---|---|---|---|---|
| | | Type | (mmol) | | Type | (ml) |
| Example 1 | 0.015 | $(i\text{-}Bu)_3Al$ | 1 | (7) 0.7 | 1-hexene | 100 |
| " 2 | " | " | " | (6) 0.6 | - | - |
| " 3 | " | " | " | (8) 0.8 | 1-hexene | 10 |
| " 4 | " | " | " | (") " | - | - |
| " 5 | " | " | 0.5 | (7) 0.7 | 4-methyl-1-pentene | 100 |
| " 6 | " | TMPAL* | 1 | (") " | 1-hexene | " |
| " 7 | " | TEHAL** | " | (") " | " | " |
| " 8 | " | isoprenyl aluminum | " | (") " | " | |
| " 9 | " | $(i\text{-}Bu)_3Al$ | " | (8) 0.8 | - | - |
| Comp. Example 1 | 0.015 | - | - | (6) 0.6 | - | - |
| " 2 | " | " | " | (8) 0.8 | " | " |

* TMPAL; Tri(2-methylpentyl)aluminum
** TEHAL; Tri(2-ethylhexyl)aluminum

- to be continued -

Table 1 (continued)

| | Polymerization temperature (°C) | Polymerization time (hr) | Amount yielded (g) | Activity (g-polymer/mmol-Zr) |
|---|---|---|---|---|
| Example 1 | 70 | 2 | 101.2 | 6750 |
| " 2 | " | " | 53.7 | 3580 |
| " 3 | " | " | 46.8 | 3120 |
| " 4 | " | " | 17.8 | 1190 |
| " 5 | 70 | 2 | 112.5 | 7500 |
| " 6 | " | " | 94.1 | 6270 |
| " 7 | " | " | 96.2 | 6410 |
| " 8 | " | " | 60.6 | 4040 |
| " 9 | 80 | 1 | 22.0 | 1470 |
| Comp. Example 1 | 70 | 2 | 12.2 | 810 |
| " 2 | 80 | 1 | 5.6 | 370 |

Table 2

| | MFR (g/10 min.) | Density ($g/cm^3$) | $\bar{M}w/\bar{M}n$ | Bulk density ($g/cm^3$) | n-decane-soluble portion at room temperatures (wt %) |
|---|---|---|---|---|---|
| Example 1 | 0.16 | 0.916 | 2.98 | 0.33 | 0.31 |
| " 2 | 0.03 | - | 2.79 | 0.40 | - |
| " 3 | 1.45 | 0.925 | 3.03 | 0.31 | 0.10 |
| " 4 | 0.19 | - | 2.88 | 0.36 | - |
| " 5 | 0.25 | 0.920 | 3.10 | 0.34 | 0.25 |
| " 6 | 0.13 | 0.915 | 2.93 | 0.33 | 0.29 |
| " 7 | 0.10 | 0.914 | 3.08 | 0.35 | 0.27 |
| " 8 | 0.28 | 0.918 | 3.01 | 0.34 | 0.24 |
| " 9 | 0.11 | - | 3.00 | 0.38 | - |
| Comp. Example 1 | 0.04 | - | 2.70 | 0.41 | - |
| " 2 | 0.14 | - | 3.24 | 0.34 | - |

## Claims

**1.** A process for polymerizing olefins, which comprises polymerizing or copolymerizing olefins in the presence of a catalyst composed of

(A) a solid catalyst component composed of a compound of a transition metal which compound is represented by formula (I)

$$R^1_k R^2_\ell R^3_m R^4_n Me \quad (I)$$

wherein $R^1$ represents a cycloalkadienyl group, $R^2$, $R^3$ and $R^4$ are identical or different and each represents a cycloalkadienyl group, an aryl group, an alkyl group, an aralkyl group, a halogen atom or a hydrogen atom, Me represents zirconium, titanium or hafnium, k is 1, 2, 3 or 4, l, m and n are each 0, 1, 2 or 3, and $k+l+m+n=4$, supported on an inorganic carrier,

(B) an aluminoxane, and

(C) an organoaluminium compound having a hydrocarbon group other than n-alkyl groups.

**2.** A process according to claim 1 wherein the the inorganic carrier is treated with an organoaluminum compound or a halogen-containing silicon compound prior to deposition of the transition metal compound on it.

**3.** A process according to claim 1 or 2 wherein the inorganic carrier is a porous inorganic oxide.

4. A process according to any one of the preceding claims wherein a or the organic group of the organoaluminium compound is a branched alkyl group, a cycloalkyl group or an aryl group.

5. A process according to any one of the preceding claims wherein the concentration of a aluminoxane is not more than 3 milligram atoms/liter calculated as aluminium atoms in the reaction system.

**Patentansprüche**

1. Verfahren zum Polymerisieren von Olefinen, umfassend das Polymerisieren oder Copolymerisieren von Olefinen in Gegenwart eines Katalysators, bestehend aus
   (A) einer festen Katalysatorkomponente, bestehend aus einer Verbindung eines Übergangsmetalls, wobei die Verbindung angegeben wird durch die Formel (I)

   $R^1_k R^2_\ell R^3_m R^4_n Me$ (I)

   wobei $R^1$ eine Cycloalkadienylgruppe bedeutet, $R^2$, $R^3$ und $R^4$ gleich oder verschieden sind und jeweils eine Cycloalkadienylgruppe, eine Arylgruppe, eine Alkylgruppe, eine Aralkylgruppe, ein Halogenatom oder ein Wasserstoffatom bedeuten, Me Zirkonium, Titan oder Hafnium bedeutet, k 1, 2, 3 oder 4 ist, l, m und n jeweils 0, 1, 2 oder 3 sind und $k+l+m+n=4$ ist, auf einem anorganischen Träger,
   (B) einem Aluminoxan und
   (c) einer Organoaluminiumverbindung mit einer anderen Kohlenwasserstoffgruppe als n-Alkylgruppen.

2. Verfahren nach Anspruch 1, wobei der anorganische Träger behandelt ist mit einer Organoaluminiumverbindung oder einer halogenhaltigen Siliciumverbindung vor der Abscheidung der Übergangsmetallverbindung darauf.

3. Verfahren nach Anspruch 1 oder 2, wobei der anorganische Träger ein poröses anorganisches Oxid ist.

4. Verfahren nach einem der vorangehenden Ansprüche, wobei eine oder die organische Gruppe der Organoaluminiumverbindung eine verzweigte Alkylgruppe, eine Cycloalkylgruppe oder eine Arylgruppe ist.

5. Verfahren nach einem der vorangehenden Ansprüche, wobei die Konzentration an Aluminoxan nicht mehr als 3 mg-Atom/l, berechnet als Aluminiumatom, in dem Reaktionssystem beträgt.

**Revendications**

1. Procédé de polymérisation d'oléfines, qui comprend la polymérisation ou la copolymérisation d'oléfines en présence d'un catalyseur constitué de :
   (A) un constituant solide de catalyseur, constitué d'un dérivé d'un métal de transition, qui est représenté par la formule (I) :

   $R^1_k R^2_1 R^3_m R^4_n Me$ (I)

   dans laquelle $R^1$ représente un groupe cycloalcadiényle, $R^2$, $R^3$ et $R^4$ sont identiques ou différents et représentent chacun un groupe cycloalcadiényle, un groupe aryle, un groupe alkyle, un groupe aralkyle, un atome d'halogène ou un atome d'hydrogène, Me représente le zirconium, le titane ou l'hafnium, k est égal à 1, 2, 3 ou 4, l, m et n représentent chacun 0, 1, 2 ou 3, et la somme $k + l + m + n$ est égale à 4, ledit dérivé étant fixé sur un support minéral,
   (B) un aluminoxane, et
   (C) un composé organo-aluminium, ayant un groupe hydrocarboné autre que les groupes n-alkyle.

2. Procédé selon la revendication 1, dans lequel le support minéral est traité avec un composé organo-aluminium ou un dérivé halogéné du silicium, avant le dépôt du dérivé de métal de transition sur ledit support minéral.

3. Procédé selon la revendication 1 ou 2, dans lequel le support minéral est un oxyde minéral poreux.

4. Procédé selon l'une quelconque des revendications précédentes, dans lequel un ou le groupe organique du composé organo-aluminium est un groupe alkyle ramifié, un groupe cycloalkyle ou un groupe aryle.

5. Procédé selon l'une quelconque des revendications précédentes, dans lequel la concentration d'aluminoxane, exprimée en atomes d'aluminium dans le système réactionnel, n'est pas supérieure à 3 milliatome grammes/litre.